(19) Europäisches Patentamt
European Patent Office
Office européen des brevets

(11) **EP 2 451 856 B1**

(12) **EUROPÄISCHE PATENTSCHRIFT**

(45) Veröffentlichungstag und Bekanntmachung des Hinweises auf die Patenterteilung:
**11.12.2013   Patentblatt 2013/50**

(21) Anmeldenummer: **10730725.8**

(22) Anmeldetag: **06.07.2010**

(51) Int Cl.:
***C08G 18/48*** *(2006.01)*

(86) Internationale Anmeldenummer:
**PCT/EP2010/004110**

(87) Internationale Veröffentlichungsnummer:
**WO 2011/003590 (13.01.2011 Gazette 2011/02)**

(54) **VERFAHREN ZUR HERSTELLUNG VON FLAMMGESCHÜTZTEN POLYURETHANSCHAUMSTOFFEN MIT GUTEN DAUERGEBRAUCHSEIGENSCHAFTEN**

METHOD FOR PRODUCING FLAME-RETARDANT POLYURETHANE FOAM MATERIALS HAVING GOOD LONG-TERM USE PROPERTIES

PROCÉDÉ DE FABRICATION DE MOUSSES DE POLYURÉTHANE IGNIFUGÉES ET APTES À UNE LONGUE DURÉE D'UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **09.07.2009   DE 102009032415**

(43) Veröffentlichungstag der Anmeldung:
**16.05.2012   Patentblatt 2012/20**

(73) Patentinhaber: **Bayer Intellectual Property GmbH 40789 Monheim (DE)**

(72) Erfinder:
• **KLESCZEWSKI, Bert**
  **51069 Köln (DE)**
• **OTTEN, Manduela**
  **51375 Leverkusen (DE)**
• **MEYER-AHRENS, Sven**
  **51375 Leverkusen (DE)**

(74) Vertreter: **BIP Patents c/o Bayer Intellectual Property GmbH Creative Campus Monheim Alfred-Nobel-Straße 10 40789 Monheim (DE)**

(56) Entgegenhaltungen:
WO-A1-03/016373     DE-A1- 19 811 472
JP-A- 10 147 623

## Beschreibung

Der Gegenstand der vorliegenden Erfindung betrifft ein Verfahren zur Herstellung von flammgeschützten Polyurethanschaumstoffen, insbesondere von flammgeschützten Polyurethanweichschaumstoffen, wobei die resultierenden flammgeschützten Polyurethanschaumstoffe guten Dauergebrauchseigenschaften aufweisen.

JP-A 10-147623 offenbart halogenfreie flammschutzhaltige Polyurethanweichschaumstoffe enthaltend eine Kombination aus rotem Phosphor und Ammoniumpolyphosphat sowie gegebenenfalls expandierbarem Graphit. Die resultierenden Polyurethanweichschaumstoffe haben den technischen Nachteil, dass diese ungenügende Alterungseigenschaften sowie unzureichende Flammschutzeigenschaften aufweisen.

Es bestand ein großer Bedarf flammgeschützte Polyurethanschaumstoffe bereit zustellen, die sowohl ausgezeichnete Alterungseigenschaften sowie hohe Flammschutzeigenschaften aufweisen, d.h. insbesondere sollten die Flammschutzanforderungen gemäß British Standard 5852, Part 2, Crib V erfiillt sowie ein gutes Werteniveau des Druckverformungsrests erreicht werden.

Diese Aufgabe wird überraschenderweise gelöst durch ein Verfahren zur Herstellung von flammgeschützten Polyurethanschaumstoffen, vorzugsweise zur Herstellung von flammgeschützten Polyurethanweichschaumstoffen, aus

> Komponente A:
>
>> A1 100 Gewichtsteile (Gew.-Teile) eines oder mehrerer füllstoffhaltiger Polyetherpolyole (A1.1), wobei der Füllstoff ein Reaktionsprodukt aus einem Di- oder Polyisocyanat mit einer gegenüber Isocyanaten reaktionsfähigen Wasserstoffatomen aufweisenden Verbindung ist, oder
>> einer Mischung aus
>>
>>> A1.1 füllstoffhaltigen Polyetherpolyol (A1.1), wobei der Füllstoff ein Reaktionsprodukt aus einem Di- oder Polyisocyanat mit einer gegenüber Isocyanaten reaktionsfähigen Wasserstoffatomen aufweisenden Verbindung ist, und
>>> A1.2 weiteren gegenüber Isocyanaten reaktionsfähigen Wasserstoffatomen aufweisenden Verbindungen mit einem Molekulargewicht von 400 - 18000,
>>
>> A2 0 bis 10 Gew.-Teile, bevorzugt 0 bis 2 Gew.-Teile (bezogen auf Komponente A1) gegenüber Isocyanaten reaktionsfähigen Wasserstoffatomen aufweisenden Verbindungen mit einem Molekulargewicht von 62 - 399,
>> A3 0,5 bis 25 Gew.-Teile, bevorzugt 2 bis 5 Gew.-Teile (bezogen auf Komponente A1) Wasser und/oder physikalische Treibmittel,
>> A4 1 bis 9 Gew.-Teile, bevorzugt 2 bis 7 Gew.-Teile, besonders bevorzugt 3 bis 6 Gew.-Teile (bezogen auf die Summe der Komponenten A1) roter Phosphor,
>> A5 0 bis 15 Gew.-Teile, bevorzugt 0,1 bis 4 Gew.-Teile (bezogen auf Komponente A1) Hilfs- und Zusatzstoffe wie
>>
>>> a) verschiedene Katalysatoren,
>>> b) oberflächenaktive Zusatzstoffe,
>>> c) ein oder mehrere Additive ausgewählt aus der Gruppe bestehend aus Reaktionsverzögerer, Zellregler, Pigmente, Farbstoffe, von Komponente A4 verschiedene Flammschutzmittel, Stabilisatoren gegen Alterungs- und Witterungseinflüsse, Weichmacher, fungistatisch und bakteriostatisch wirkende Substanzen, Füllstoffe und Trennmittel,
>
> und
> Komponente B:
>
>> B Di- oder Polyisocyanaten,

wobei kein Ammoniumpolyphosphat und kein Melamin eingesetzt wird, und
wobei die Herstellung bei einer Kennzahl von 50 bis 250, bevorzugt von 70 bis 150, besonders bevorzugt von 95 bis 125 erfolgt.

Die Gewichtsteilangaben der Komponenten A2 bis A5 in der vorliegenden Anmeldung beziehen sich also auf 100 Gewichtsteile der Gewichtsteile der Komponenten A1.

Das Verfahren der vorliegenden Erfindung unterscheidet sich von JP-A 10-147623 also insbesondere dadurch, dass kein Ammoniumpolyphosphat als Flammschutzmittel eingesetzt wird.

In einer besonders bevorzugten Ausführungsform der Erfindung werden im Verfahren kein Melamin und/oder kein Blähgrafit eingesetzt. In einer höchst bevorzugten Ausführungsform der Erfindung wird im Verfahren neben rotem Phosphor kein weiteres Flammschutzmittel eingesetzt.

Die Herstellung von Schaumstoffen auf Isocyanatbasis ist an sich bekannt und z.B. in DE-A 1 694 142, DE-A 1 694 215 und DE-A 1 720 768 sowie im Kunststoff-Handbuch Band VII, Polyurethane, herausgegeben von Vieweg und Höchtlein, Carl Hanser Verlag München 1966, sowie in der Neuauflage dieses Buches, herausgegeben von G. Oertel, Carl Hanser Verlag München, Wien 1993, beschrieben.

Es handelt sich dabei vorwiegend um Urethan- und/oder Uretdion- und/oder Harnstoff-und/oder Carbodiimidgruppen aufweisende Schaumstoffe. Die erfindungsgemäße Verwendung erfolgt vorzugsweise bei der Herstellung von Polyurethan- und Polyisocyanurat-Schaumstoffen.

Für die Herstellung der Schaumstoffe auf Isocyanatbasis können die nachfolgend näher beschriebenen Komponenten eingesetzt werden.

Komponente A1

Ausgangskomponenten gemäß Komponente A1.1 sind füllstoffhaltige Polyetherpolyole, wobei der Füllstoff ein Reaktionsprodukt aus einem Di- oder Polyisocyanat mit einer gegenüber Isocyanaten reaktionsfähigen Wasserstoffatomen aufweisenden Verbindung ist.

Für das erfindungsgemäße Verfahren handelt es sich vorzugsweise bei den füllstoffhaltige Polyetherpolyole gemäß Komponente A1.1 mit einem Füllstoffaufbau aus

A1.1.1 Polyharnstoffdispersionen, die durch Umsetzung von Diaminen und Diisocyanaten in Gegenwart der Polyolkomponente A1.2 erhalten werden (PHD-Dispersionen), und/oder

A1.1.2 Urethangruppen enthaltende Dispersionen, die durch Umsetzung von Alkanolaminen und Diisocyanaten in der Polyolkomponente A1.2 erhalten werden (PIPA-Polyole).

Die füllstoffhaltigen Polyetherpolyolen gemäß Komponente A1.1.1 (PHD-Dispersion) werden beispielsweise hergestellt durch in situ Polymerisation eines Isocyanats oder einer Isocyanat-Mischung mit einem Diamin und/oder Hydrazin in einem Polyol gemäß Komponente A1.2, vorzugsweise einem Polyetherpolyol. Vorzugsweise wird die PHD-Dispersion hergestellt durch Umsetzung einer Isocyanat-Mischung eingesetzt aus einer Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazin in einem Polyetherpolyol, vorzugsweise einem Polyetherpolyol hergestellt durch Alkoxylierung eines trifunktionellen Starters (wie beispielsweise Glycerin und/oder Trimethylolpropan). Verfahren zur Herstellung von PHD-Dispersionen sind beispielsweise beschrieben in US 4,089,835 und US 4,260,530.

Bei den füllstoffhaltigen Polyetherpolyolen gemäß Komponente A1.1.2 handelt es sich vorzugsweise um PIPA (Polyisocyanat-Polyaddition mit Alkanolaminen)-modifizierte Polyetherpolyole, wobei das Polyetherpolyol eine Funktionalität von 2,5 bis 4 und ein Molekulargewicht von 500 bis 18000 aufweist.

Ausgangskomponenten gemäß Komponente A1.2 sind Verbindungen mit mindestens zwei gegenüber Isocyanten reaktionsfähigen Wasserstoffatomen von einem Molekulargewicht in der Regel von 400 - 18000. Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen speziell solche vom Molekulargewicht 1000 bis 6000, vorzugsweise 2000 bis 6000, z.B. mindestens 2, in der Regel 2 bis 8, vorzugsweise aber 2 bis 6, Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der EP-A 0 007 502, Seiten 8 - 15, beschrieben werden. Die mindestens zwei Hydroxylgruppen aufweisenden Polyetherpolyole sind erfindungsgemäß bevorzugt. Vorzugsweise werden die Polyetherpolyole hergestellt durch Addition von Alkylenoxiden (wie beispielsweise Ethylenoxid,Propylenoxid und Butylenoxid oder deren Mischungen) an Startern wie Ethylenglykol, Propylenglykol, Glycerin, Trimethylolpropan, Pentaerythrit, Sorbit, Mannit und/oder Sucrose, so daß eine Funktionalität zwischen 2 und 8, vorzugsweise zwischen 2,5 und 6, besonders bevorzugt zwischen 2,5 und 4 eingestellt werden kann.

Komponente A1 kann auch als Komponentene A1.3 gefüllte Polyetherpolyole mit einem Füll-stoffaufbau aus Dispersionen enthalten, die durch Pfropfung von olefinisch ungesättigten Monomeren (beispielsweise Styrol und/oder Acrylnitril) an ein Polyetherpolyol (wie beispielsweise ein Polyetherpolyol gemäß Komponente A1.2) erhalten werden (SAN-Polyole), wobei diese nun in Mengen eingesetzt werden, dass der Füllstoffgehalt, bezogen auf die Polyolkomponente A1 enthaltend A1.1 und A 1.2 bis zu 5 Gew.%, vorzugsweise bis zu 2 Gew.-% Füllstoff(resultierend aus Komponente A1.3) beträgt. In einer bevorzugten Ausführungsform wird im erfindungsgemäßen Verfahren kein gefülltes Polyetherpolyol eingesetzt mit einem Füll-stoffaufbau aus Dispersionen (Komponente A1.3), die durch Pfropfung von olefinisch ungesättigten Monomeren wie Styrol und/oder Acrylnitril an die Polyolkomponente A1.2 erhalten werden (SAN-Polyole).

In einer bevorzugten Ausführungsform werden als Komponente A die Komponenten A1.1 und A1.2 in einem Gewichtsverhältnis von A1.1 : A1.2 = 100 : 0 bis 20 : 80, besonders bevorzugt in einem Gewichtsverhältnis von A1.1 : A1.2 = 100 : 0 bis 60 : 40 eingesetzt. Höchst bevorzugt wird als Komponente A ausschließlich Komponente A1.1 eingesetzt (d.h. im Herstellverfahren werden höchst bevorzugt keine Ausgangskomponenten gemäß Komponente A1.2 eingesetzt).

Der Füllstoffgehalt, bezogen auf die Polyolkomponente A1 enthaltend A1.1.1, A1.1.2 und gegebenenfalls A1.2 beträgt bevorzugt 2 bis 30 Gew.-%, besonders bevorzugt 5 bis 25 Gew.-%, höchst bevorzugt 15 bis 22 Gew.-% Füllstoff PHD und/oder PIPA. Da die Füllstoffdispersionen A1.1 in der Regel zwischen 10 und 40 Gew.-% Füllstoffanteil hergestellt werden, ist dies entsprechend zu berücksichtigen. Beispielsweise resultiert im Falle eines Füllstoffanteils von 20 Gew.-% der Komponente A1.1 und einem Mengenverhältnis von 75 Gew.-Teilen A1.1. und 25 Gew.-Teilen A1.2 ein Füllstoffgehalt von 15 Gew.-%, bezogen auf die Polyolkomponente A1.

Komponente A2

Gegebenenfalls werden als Komponente A2 Verbindungen mit mindestens zwei gegenüber Isocyanaten reaktionsfähigen Wasserstoffatomen und einem Molekulargewicht von 32 bis 399 eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispielsweise können als Komponente A2 Ethanolamin, Diethanolamin, Triethanolamin, Sorbit und/oder Glycerin eingesetzt werden. Weitere Beispiele für Verbindungen gemäß Komponente A2 werden in EP-A 0 007 502, Seiten 16 - 17, beschrieben.

Komponente A3

Als Komponente A3 werden Wasser und/oder physikalische Treibmittel eingesetzt. Als physikalische Treibmittel werden beispielsweise Kohlendioxid und/oder leicht flüchtige organische Substanzen wie z. B. Dichlormethan als Treibmittel eingesetzt.

Komponente A4

Bei Komponente A4 handelt es sich um roten Phosphor.

Bevorzugt wird roter Phosphor im erfindungsgemäßen Verfahren als Feststoff dispergiert in Flüssigkeiten eingesetzt. Hierfür geeignete Flüssigkeiten (hierunter werden im erfindungsgemäßen Sinne Substanzen verstanden, deren Schmelzpunkt unterhalb von 25°C liegt) umfassen einerseits solche, die gegenüber Isocyanate reaktive Gruppen aufweisen, z. B. Polyetherpolyole, Polyesterpolyole, Ricinusöl, und andererseits solche, die keine gegenüber Isocyanate reaktive Gruppen aufweisen, sich jedoch dadurch auszeichnen, dass sie sowohl eine gute Dispergierung des roten Phosphors als auch die Weitererarbeitung zum Schaumstoff gestatten. Beispiele für letztere sind z. B. Phenolalkylsulfonsäureester (Handelsname z. B. Mesamoll®, Fa. Lanxess AG, Leverkusen), Adipinsäurepolyester (Handelsname z. B. Ultramoll®, Fa. Lanxess AG, Leverkusen) oder Phthalsäureester wie z. B. Di-i-octylphthalat, Dibutylphthalat.

Komponente A5

Als Komponente A5 werden gegebenenfalls Hilfs- und Zusatzstoffe verwendet wie

a) Katalysatoren (Aktivatoren),
b) oberflächenaktive Zusatzstoffe (Tenside), wie Emulgatoren und Schaumstabilisatoren,
c) ein oder mehrere Additive ausgewählt aus der Gruppe bestehend aus wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, von Komponente A4 verschiedene Flammschutzmittel (wie beispielsweise Trikresylphosphat), Stabilisatoren gegen Alterungs-und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B.

auf den Seiten 104-127 beschrieben.

Als Katalysatoren werden bevorzugt eingesetzt: aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethylbisaminoethylether), cycloaliphatische Aminoether (beispielsweise N-Ethylmorpholin), aliphatische Amidine, cycloaliphatische Amidine, Harnstoff und Derivate des Harnstoffs (wie beispielsweise Aminoalkylharnstoffe, siehe zum Beispiel EP-A 0 176 013, insbesondere (3-Dimethylaminopropylamin)-harnstoff).

Als Katalysatoren können auch Zinn(II)-Salze von Carbonsäuren eingesetzt werden, wobei vorzugsweise die jeweils zugrundeliegende Carbonsäure von 2 bis 20 Kohlenstoffatome aufweist. Besonders bevorzugt sind das Zinn (II)-Salz der 2-Ethylhexansäure (d.h. Zinn(II)-(2-ethylhexanoat)), das Zinn(II)-Salz der 2-Butyloctansäure, das Zinn (II)-Salz der 2-Hexyldecansäure, das Zinn(II)-Salz der Neodecansäure, das Zinn(II)-Salz der Ölsäure, das Zinn(II)-Salz der Ricinolsäure und Zinn(II)laurat. Es können auuch Zinn(IV)-Verbindungen, wie z.B. Dibutylzinnoxid, Dibutylzinndichlorid, Dibutylzinndiacetat, Dibutylzinndilaurat, Dibutylzinnmaleat oder Dioctylzinndiacetat als Katalysatoren eingesetzt werden.

Selbstverständlich können alle oben genannten Katalysatoren als Gemische eingesetzt werden.

Komponente B

Als Komponente B werden aliphatische, cycloaliphatische, araliphatische, aromatische und heterocyclische Polyisocyanate eingesetzt, wie sie z.B. von W. Siefken in Justus Liebigs Annalen der Chemie, 562, Seiten 75 bis 136, beschrieben werden, beispielsweise solche der Formel (I)

$$Q(NCO)_n \qquad (I)$$

in der

n = 2 - 4, vorzugsweise 2 -3,

und

Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 -13 C-Atomen

bedeuten.

Beispielsweise handelt es sich um solche Polyisocyanate, wie sie in der EP-A 0 007 502, Seiten 7 - 8, beschrieben werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Komponente B mindestens eine Verbindung ausgewählt aus der Gruppe bestehend aus 2,4- und 2,6-Toluylendüsocyanat, 4,4'-und 2,4'- und 2,2'-Diphenylmethandiisocyanat und Polyphenylpolymethylenpolyisocyanat ("Mehrkern-MDI") eingesetzt.

Durchführung des Verfahrens zur Herstellung von Polyurethanschaumstoffen

Die Polyurethanschaumstoffe können nach verschiedenen Verfahren der Blockschaumstoffher-stellung oder aber in Formen hergestellt werden. Zur Durchführung des erfindungsgemäßen Verfahrens werden die Reaktionskomponenten nach dem an sich bekannten Einstufenverfahren, dem Prepolymerverfahren oder dem Semiprepolymerverfahren zur Umsetzung gebracht, wobei man sich vorzugsweise maschineller Einrichtungen bedient wie sie in US 2 764 565 beschrieben werden. Einzelheiten über Verarbeitungseinrichtungen, die auch erfindungsgemäß infrage kommen, werden im Vieweg und Höchtlen (Hrsg.): Kunststoff-Handbuch, Band VII, Carl-Hanser-Verlag, München 1966, S. 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz in Frage. In der Form schäumt das schaumfähige Reaktionsgemisch auf und bildet den Formkörper. Die Formverschäumung kann dabei so durchgerührt werden, daß das Formteil an seiner Oberfläche Zellstruktur aufweist. Sie kann aber auch so durchgeführt werden, dass das Formteil eine kompakte Haut und einen zelligen Kern aufweist. Erfindungsgemäß kann man in diesem Zusammenhang so vorgehen, dass man in die Form so viel schaumfähiges Reaktionsgemisch einträgt, daß der gebildete Schaumstoff die Form gerade ausfüllt. Man kann aber auch so arbeiten, dass man mehr schaumfähiges Reaktionsgemisch in die Form einträgt, als zur Ausfüllung des Forminneren mit Schaumstoff notwendig ist. Im letztgenannten Fall wird somit unter sog. "overcharging" gearbeitet; eine derartige Verfahrensweise ist z. B. aus US 3 178 490 und US 3 182 104 bekannt.

Bei der Formverschäumung werden vielfach an sich bekannte "äuBere Trennmittel" wie Siliconöle mitverwendet. Man kann aber auch sogenannte "innere Trennmittel", verwenden, gegebenenfalls im Gemisch mit äußeren Trennmitteln, wie dies beispielsweise aus DE-OS 21 21 670 und DE-OS 23 07 589 hervorgeht.

Die Polyurethanschaumstoffe werden vorzugsweise durch Blockverschäumung oder nach dem an sich bekannten Doppeltransportbandverfahren (siehe beispielsweise "Kunststoffhandbuch", Band VII, Carl Hanser Verlag, München Wien, 3. Auflage 1993, S. 148) hergestellt.

Vorzugsweise wird das erfindungsgemäße Verfahren angewandt zur Herstellung von Polyurethanweichschaumstoffen mit einer Rohdichte (auch als Raumgewicht bezeichnet) von 10 kg m$^{-3}$ bis 200 kg m$^{-3}$, besonders bevorzugt von 15 kg m$^{-3}$ bis 80 kg m$^{-3}$.

## Beispiele

Komponente A1:

A1-1 1 PHD-Füllstoffpolyol einer 20%igen Dispersion aus Toluylendiisocyanat (Desmodur® T 80, BayerMaterialScience AG, Leverkusen, Deutschland) und Hydrazin in einem Polyetherpolyol aus 83 Gew.% Propylenoxid und 17 Gew.-% Ethylenoxid sowie Trimethylolpropan als Starter mit überwiegend primären OH-Gruppen, mit einer OH-Zahl von 28 mg KOH/g und einem Wassergehalt von 0,5 Gew.-%.

A1-2 SAN-Füllstoffpolyol einer 25%igen Dispersion aus einem mit 60 Gew.% Acrylnitril und 40 Gew.-% Styrol gepfropften Polyol aus Glycerin als Starter und 83 Gew.-% Propylenoxid und 17 Gew.-% Ethylenoxid mit überwiegend primären OH-Gruppen, mit einer OH-Zahl von 31 mg KOH/g.

Komponente A2: Diethanolamin (BASF SE, Ludwigshafen, Deutschland).

Komponente A3: Wasser.

Komponente A4:

Roter Phosphor: Exolit® RP 6520, eine Dispersion von rotem Phosphor in Ricinusöl (Clariant Produkte (Deutschland) GmbH, 50351 Hürth).

Komponente A5:

A5-1 1,4-Diazabicyclo[2.2.2]octan (33 Gew.%) in Dipropylenglykol (67 Gew.%) (Dabco® 33 LV, Air Products, Hamburg, Deutschland).

A5-2 Zinn(II)-Salz der 2-Ethylhexansäure (Addocat® SO, Rheinchemie, Mannheim, Deutschland).

A5-3 Polyethersiloxan-basierender Schaumstoffstabilisator Tegostab® B 8681 (Evonik Goldschmidt GmbH, Deutschland).

A5-4 Blähgrafit Expofoil PX 99 (Georg Huh GmbH, 65396 Walluf).

A5-5 Melamin (BASF SE, Ludwigshafen, Deutschland).

A5-6 Ammoniumpolyphosphat (Exolite® AP 422, Clariant Produkte (Deutschland) GmbH, 50351 Hürth).

A5-7 Calciumhydroxid.

Komponente B:

Gemisch aus 2,4- und 2,6-TDI im Gewichtsverhältnis 80 : 20 und mit einem NCO-Gehalt von 48 Gew.-%.

Herstellung der Polyurethanschaumstoffe

Unter den für die Herstellung von Polyurethanschaumstoffen üblichen Verarbeitungsbedingungen werden die Ausgangskomponenten im Einstufenverfahren mittels Blockverschäumung verarbeitet. In der Tabelle 1 angegeben ist die Kennzahl der Verarbeitung (danach ergibt sich die Menge an einzusetzender Menge an Komponente B im Verhältnis zu Komponente A). Die Kennzahl (Isocyanat Index) gibt das prozentuale Verhältnis der tatsächlich eingesetzten Isocyanat-Menge zur stöchiometrischen, d.h. berechneten Isocyanat-Gruppen (NCO)-Menge an:

$$\text{Kennzahl} = [(\text{Isocyanat-Menge eingesetzt}) : (\text{Isocyanat-Menge berechnet})] \bullet 100 \qquad (\text{II})$$

Das Raumgewicht wurde bestimmt gemäß DIN EN ISO 845.

Die Stauchhärte (CLD 40%) wurde bestimmt gemäß DIN EN ISO 3386-1-98 bei einer Verformung von 40%, 4. Zyklus.

Die Zugfestigkeit und die Bruchdehnung wurden bestimmt gemäß DIN EN ISO 1798.

Der Druckverformungsrest (DVR 90%) wurde bestimmt gemäß DIN EN ISO 1856-2000 bei 90% Verformung.

Crib 5: Brennbarkeitsprüfung gemäß British Standard 5852,Part 5, Crib 5.

Tabelle 1: Polyurethanweichschaumstoffe, Rezepturen und Eigenschaften

|  |  | 1 (Vgl.) | 2 | 3 | 4 (Vgl.) | 5 (Vgl.) | 6 (Vgl.) | 7 (Vgl.) |
|---|---|---|---|---|---|---|---|---|
| A1-1 |  | 100 | 100 | 100 | 100 | 100 |  |  |
| A1-2 |  |  |  |  |  |  | 100 | 100 |
| A2 |  | 1,2 | 1,2 | 1,2 | 1,2 | 1,2 | 1,2 | 1,2 |
| A3 (Wasser eingesetzt) |  | 2,0 | 2,0 | 2,0 | 2,0 | 2,0 | 2,5 | 2,5 |
| A3 (Wasser gesamt) |  | 2,5 | 2,5 | 2,5 | 2,5 | 2,5 | 2,5 | 2,5 |
| A4 |  |  | 5,0 | 5,0 | 5,0 | 5,0 | 5,0 | 5,0 |
| A5-1 |  | 0,25 | 0,25 | 0,25 | 0,25 | 0,25 | 0,25 | 0,25 |
| A5-2 |  | 0,18 | 0,18 | 0,18 | 0,18 | 0,20 | 0,20 | 0,20 |
| A5-3 |  | 0,35 | 0,35 | 0,35 | 0,35 | 0,35 | 0,40 | 0,40 |
| A5-4 |  |  |  |  | 5,0 | 5,0 |  |  |
| A5-5 |  |  |  |  | 5,0 | 5,0 |  | 5,0 |
| B |  | 33,98 | 34,65 | 34,65 | 34,65 | 34,70 | 34,50 | 35,10 |
| Kennzahl |  | 108 | 108 | 108 | 108 | 108 | 108 | 108 |
| Eigenschaften |  |  |  |  |  |  |  |  |
| Rohdichte | [kg/m$^3$] | 35 | 35,3 | 37,1 | 38,2 | 38,1 | 33,7 | 35,7 |
| Zugfestigkeit | [kPa] | 145 | 123 | 128 | 103 | 114 | 129 | 126 |
| Bruchdehnung | [%] | 120 | 122 | 116 | 104 | 94 | 128 | 113 |
| Stauchhärte | [kPa] | 3,19 | 3,09 | 3,43 | 3,41 | 4,41 | 4,54 | 4,15 |
| DVR 90% | [%] | 5,5 | 6,8 | 6,1 | 12,6 | 21,1 | 9,4 | 39,7 |
| Crib 5 | Bestanden | nein | ja | ja | ja | ja | nein | nein |

Die in der Tabelle aufgeführten Ergebnisse zeigen, dass nur die in den erfindungsgemäßen Beispielen 2 und 3 beschriebenen Schaumstoffe die Anforderungen gemäß British Standard 5852, Part 5, Crib 5 erfüllen und gute Dauergebrauchseigenschaften aufweisen.

Tabelle 2: Polyurethanweichschaumstoffe, Rezepturen und Eigenschaften

| | | 8 (Vgl.) | 9 (Vgl.) |
|---|---|---|---|
| A1-1 | | 100 | 100 |
| A2 | | 1,2 | 1,2 |
| A3 (Wasser eingesetzt) | | 2,0 | 2,0 |
| A3 (Wasser gesamt) | | 2,5 | 2,5 |
| A4 | | 5,0 | 5,0 |
| A5-1 | | 0,25 | 0,25 |
| A5-2 | | 0,25 | 0,25 |
| A5-3 | | 0,4 | 0,4 |
| A5-6 | | 5,0 | 5,0 |
| A5-7 | | | 1,0 |
| B | | 34,65 | 34,65 |
| Kennzahl | | 108 | 108 |
| Eigenschaften | | 1) | |
| Rohdichte | [kg/m$^3$] | | 37,2 |
| Zugfestigkeit | [kPa] | | 111 |
| Bruchdehnung | [%] | | 103 |
| Stauchhärte | [kPa] | | 3,88 |
| DVR 90% | [%] | | 20,1 |
| Crib 5 | Bestanden | | nein |
| 1) Das aufsteigende Reaktionsgemisch kollabiert. Daher war es nicht möglich, Eigenschaften am Polyurethanschaum zu bestimmen. | | | |

Die in der Tabelle 2 aufgeführten Ergebnisse zeigen, dass es bei Mitverwendung von Ammoniumpolyphosphat nicht möglich ist, gute Dauergebrauchseigenschaften zu erhalten und die Anforderungen gemäß British Standard 5852, Part 5, Crib 5 zu erfüllen.


**Patentansprüche**

1. Verfahren zur Herstellung von flammgeschützten Polyurethanschaumstoffen, aus

   Komponente A:

   A1 100 Gew.-Teile eines oder mehrerer füllstoffhaltiger Polyetherpolyole (A1.1), wobei der Füllstoff ein Reaktionsprodukt aus einem Di- oder Polyisocyanat mit einer gegenüber Isocyanaten reaktionsfähigen Wasserstoffatomen aufweisenden Verbindung ist, oder einer Mischung aus

   A1.1 füllstofthaltigen Polyetherpolyol, wobei der Füllstoff ein Reaktionsprodukt aus einem Di- oder Polyisocyanat mit einer gegenüber Isocyanaten reaktionsfähigen Wasserstoffatomen aufweisenden Verbindung ist, und
   A1.2 weiteren gegenüber Isocyanaten reaktionsfähigen Wasserstoffatomen aufweisenden Verbindungen mit einem Molekulargewicht von 400 - 18000,

   A2 0 bis 10 Gew.-Teile (bezogen auf Komponente A1) gegenüber Isocyanaten reaktionsfähigen Wasserstoffatomen aufweisenden Verbindungen mit einem Molekulargewicht von 62 - 399,
   A3 0,5 bis 25 Gew.-Teile (bezogen auf Komponente A1) Wasser und/oder physikalische Treibmittel,

A4 1 bis 9 Gew.-Teile (bezogen auf Komponente A1) roter Phosphor,
A5 0 bis 15 Gew.-Teile (bezogen auf Komponente A1) Hilfs- und Zusatzstoffe wie

    a) Katalysatoren,
    b) oberflächenaktive Zusatzstoffe,
    c) ein oder mehrere Additive ausgewählt aus der Gruppe bestehend aus Reaktionsverzögerer, Zellregler, Pigmente, Farbstoffe, von Komponente A4 verschiedene Flammschutzmittel, Stabilisatoren
    gegen Alterungs- und Witterungseinflüsse, Weichmacher, fungistatisch und bakteriostatisch wirkende
    Substanzen, Füllstoffe und Trennmittel,

und

Komponente B:

B Di- oder Polyisocyanaten,
wobei kein Ammoniumpolyphosphat und kein Melamin eingesetzt wird, und
wobei die Herstellung bei einer Kennzahl von 50 bis 250erfolgt.

2. Verfahren gemäß Anspruch 1, wobei kein Blähgrafit eingesetzt wird.

3. Verfahren gemäß Anspruch 1 oder 2, wobei keine Polyetherpolyole eingesetzt werden, die einen Füllstoffaufbau aus Dispersionen enthalten, die durch Pfropfung von geeigneten Monomeren wie Styrol und/oder Acrylnitril an ein Polyetherpolyol erhalten werden (SAN-Polyole).

4. Verfahren gemäß Anspruch 1 oder 2, wobei es sich bei Komponente A1.1 um Polyetherpolyole mit einem Füllstoffaufbau aus

A1.1.1 Polyharnstoffdispersionen, die durch Umsetzung von Diaminen und Diisocyanaten in Gegenwart der Polyolkomponente A 1.2 erhalten werden (PHD-Dispersionen),
und/oder
A1.1.2 Urethangruppen enthaltende Dispersionen, die durch Umsetzung von Alkanolaminen und Diisocyanaten in der Polyolkomponente A1.2 erhalten werden (PIPA-Polyole)

handelt.

5. Verfahren gemäß Anspruch 1 oder 2, wobei als Komponente A die Komponenten A1.1 und A 1.2 in einem Gewichtsverhältnis von A 1.1 : A 1.2 = 100 : 0 bis 20 : 80 eingesetzt werden.

6. Verfahren gemäß Anspruch 1 oder 2, wobei als Komponente A ausschließlich die Komponenten A 1.1 eingesetzt wird.

7. Verfahren gemäß Anspruch 1 oder 2, wobei als Komponente A4 roter Phosphor als Feststoff dispergiert in mindestens einer Flüssigkeit ausgewählt aus der Gruppe bestehend aus Polyetherpolyole, Polyesterpolyole, Ricinusöl, Phenolalkylsulfonsäureester, Adipinsäurepolyester und Phthalsäureester eingesetzt wird.

8. Polyurethanschaumstoffe erhältlich nach einem Verfahren gemäß einem der Ansprüche 1 bis 7.


## Claims

1. Process for the production of flame-retardant polyurethane foams made of
Component A:

A1 100 parts by weight of one or more filled polyether polyols (A1.1), where the filler is a reaction product of a di- or polyisocyanate with a compound having hydrogen atoms reactive towards isocyanates, or
a mixture of

A1.1 filled polyether polyol, where the filler is a reaction product of a di- or polyisocyanate with a compound having hydrogen atoms reactive towards isocyanates, and

A1.2 other compounds having hydrogen atoms reactive towards isocyanates and having a molecular weight of from 400 to 18000,

A2 from 0 to 10 parts by weight (based on component A1) of compounds having hydrogen atoms reactive towards isocyanates and having a molecular weight of from 62 to 399,

A3 from 0.5 to 25 parts by weight (based on component A1) of water and/or physical blowing agents,

A4 from 1 to 9 parts of weight (based on component A1) of red phosphorus,

A5 from 0 to 15 parts by weight (based on component A1) of auxiliaries and additives, for example

    a) catalysts,

    b) surfactant additives,

    c) one or more additives selected from the group consisting of reaction retarders, cell regulators, pigments, dyes, flame retardants differing from component A4, stabilizers with respect to effects of ageing and of weathering, plasticizers, fungistatic and bacteriostatic substances, fillers and release agents,

and
Component B:

B di or polyisocyanates,
where no ammonium polyphosphate and no melamine is used, and where the production process takes place with an index of from 50 to 250.

2. Process according to Claim 1, where no expandable graphite is used.

3. Process according to Claim 1 or 2, where no polyether polyols are used which comprise a filler structure made of dispersions which are obtained via grafting of suitable monomers such as styrene and/or acrylonitrile onto a polyether polyol (SAN polyols).

4. Process according to Claim 1 or 2, where component A1.1 involves polyether polyols with a filler structure made of

A1.1.1 polyurea dispersions which are obtained via reaction of diamines and diisocyanates in the presence of polyol component A1.2 (PHD dispersions),
and/or
A1.1.2 dispersions which comprise urethane groups and which are obtained via reaction of alkanolamines and diisocyanates in polyol component A1.2 (PIPA polyols).

5. Process according to Claim 1 or 2, where components A1.1 and A1.2 are used in a ratio by weight A1.1 : A1.2 of from 100 : 0 to 20 : 80 as component A.

6. Process according to Claim 1 or 2, where exclusively component A1.1 is used as component A.

7. Process according to Claim 1 or 2, where component A4 used comprises red phosphorus in the form of solid dispersed in at least one liquid selected from the group consisting of polyether polyols, polyester polyols, castor oil, phenol ester of alkylsulphonic acid, adipic acid polyester and phthalic ester.

8. Polyurethane foams obtained by a process according to any of Claims 1 to 7.

**Revendications**

1. Procédé pour la production de mousses de polyuréthane ignifugées, à partir de
composant A :

A1 100 parties en poids d'un ou plusieurs polyétherpolyols (A1.1) contenant une charge, la charge étant un produit de réaction d'un di- ou polyisocyanate avec un composé comportant des atomes d'hydrogène réactifs vis-à-vis d'isocyanates, ou
d'un mélange

A1.1 d'un polyétherpolyol contenant une charge, la charge étant un produit de réaction d'un di-ou polyisocyanate avec un composé comportant des atomes d'hydrogène réactifs vis-à-vis d'isocyanates, et

A1.2 d'autres composés comportant des atomes d'hydrogène réactifs vis-à-vis d'isocyanates, ayant une masse moléculaire de 400 - 18000,

A2 0 à 10 parties en poids (par rapport au composant A1) de composés comportant des atomes d'hydrogène réactifs vis-à-vis d'isocyanates, ayant une masse moléculaire de 62 - 399,

A3 0,5 à 25 parties en poids (par rapport au composant A1) d'eau et/ou d'agents gonflants physiques,

A4 1 à 9 parties en poids (par rapport au composant A1) de phosphore rouge,

A5 0 à 15 parties en poids (par rapport au composant A1) d'additifs et adjuvants tels que

a) des catalyseurs,

b) des additifs tensioactifs,

c) un ou plusieurs additifs choisis dans le groupe constitué par des ralentisseurs de réaction, des régulateurs de cellules, des pigments, des colorants, des agents ignifugeants différents du composant A4, des stabilisants vis-à-vis des effets du vieillissement et des agents atmosphériques, des plastifiants, des substances à action fongistatique et bactériostatique, des charges et des agents de démoulage,

et

composant B :

B des di- ou polyisocyanates,

en n'utilisant pas de polyphosphate d'ammonium <u>et pas de mélamine</u>, et la production s'effectuant jusqu'à un indice de 50 à 250.

2. Procédé selon la revendication 1, dans lequel on n'utilise pas de graphite gonflant.

3. Procédé selon la revendication 1 ou 2, dans lequel on n'utilise pas de polyétherpolyols qui contiennent un ensemble de charges à base de dispersions, qui sont obtenus par greffage de monomères appropriés tels que le styrène et/ou l'acrylonitrile sur un polyétherpolyol (polyols-SAN).

4. Procédé selon la revendication 1 ou 2, dans lequel le composant A1.1 consiste en des polyétherpolyols comportant un ensemble de charges à base

A1.1.1 de dispersions de polyurée qui sont obtenues par mise en réaction de diamines et de diisocyanates en présence du composant polyol A1.2 (dispersions PHD) ;
et/ou
A1.1.2 de dispersions contenant des groupes uréthane, qui sont obtenues par mise en réaction d'alcanolamines et de diisocyanates dans le composant polyol A1.2 (polyols-PIPA).

5. Procédé selon la revendication 1 ou 2, dans lequel on utilise comme composant A les composants A1.1 et A1.2 en un rapport pondéral de A1.1 : A1 : 2 = 100 : 0 à 20 : 80.

6. Procédé selon la revendication 1 ou 2, dans lequel on utilise comme composant A exclusivement les composants A1.1.

7. Procédé selon la revendication 1 ou 2, dans lequel on utilise comme composant A4 du phosphore rouge sous forme de solide dispersé dans au moins un liquide choisi dans le groupe constitué par des polyétherpolyols, des polyesterpolyols, l'huile de ricin, des esters d'acides phénolalkylsulfoniques, des polyesters d'acide adipique et des esters d'acide phtalique.

8. Mousses de polyuréthane pouvant être obtenues conformément à un procédé selon l'une quelconque des reven-dications 1 à 7.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 10147623 A
- DE 1694142 A
- DE 1694215 A
- DE 1720768 A
- US 4089835 A
- US 4260530 A
- EP 0007502 A
- EP 0000389 A
- EP 0176013 A
- US 2764565 A
- US 3178490 A
- US 3182104 A
- DE OS2121670 A
- DE OS2307589 A

**In der Beschreibung aufgeführte Nicht-Patentliteratur**

- Kunststoff-Handbuch Band VII, Polyurethane. Carl Hanser Verlag, 1966, vol. VII
- Neuauflage dieses Buches. Carl Hanser Verlag, 1993
- Einzelheiten über Verwendungs- und Wirkungsweise dieser Hilfs- und Zusatzstoffe sind im Kunststoff-Handbuch. Carl-Hanser-Verlag, 1993, vol. VII, 104-127
- **W. SIEFKEN.** Justus Liebigs Annalen der Chemie. vol. 562, 75-136
- Kunststoff-Handbuch. Carl-Hanser-Verlag, 1966, vol. VII, 121-205
- Kunststoffhandbuch. Carl Hanser Verlag, 1993, vol. VII, 148